## Europäisches Patentamt

(19) **European Patent Office**

**Office européen des brevets**

(11) Veröffentlichungsnummer: **0 129 141**
**B1**

## (12) EUROPÄISCHE PATENTSCHRIFT

(45) Veröffentlichungstag der Patentschrift:
25.02.87

(51) Int. Cl.⁴: **A 47 J 37/10**

(21) Anmeldenummer: **84106396.9**

(22) Anmeldetag: **05.06.84**

(54) **Verwendung von Teebeutelpapier als Filterfläche von Abdeckungen für Bratpfannen und demgemäss hergestellter Bratfilter.**

(30) Priorität: **10.06.83 DE 3321100**
**10.06.83 DE 3321114**

(43) Veröffentlichungstag der Anmeldung:
**27.12.84 Patentblatt 84/52**

(45) Bekanntmachung des Hinweises auf die Patenterteilung:
**25.02.87 Patentblatt 87/9**

(84) Benannte Vertragsstaaten:
**AT BE CH DE FR GB IT LI LU NL SE**

(56) Entgegenhaltungen:
**DE-A-2 915 274**
**DE-U-7 918 297**
**US-A-1 622 351**
**US-A-2 587 773**
**US-A-3 363 406**

(73) Patentinhaber: **UNION CARBIDE DEUTSCHLAND GMBH, Mörsenbroicher Weg 200, D-4000 Düsseldorf 30 (DE)**

(72) Erfinder: **Steigenberger, Dieter, Hertzstrasse 6, D-5142 Hückelhoven- Baal (DE)**

(74) Vertreter: **Eggert, Hans- Gunther, Dr., Räderscheidtstrasse 1, D-5000 Köln 41 (DE)**

## Beschreibung

Die Erfindung betrifft eine dampfdurchlässige Abdeckung für Bratpfannen oder ähnliche Gefäße, d.h. sog. Bratfilter, und diese insbesondere als selbsttragende Abdeckung für das offene Braten von Fleisch, Fisch oder dergleichen.

Durch die US-A- 16 22 651 und 25 87 773 ist es bekannt geworden, zur Vermeidung der mit den beim offenen Braten von Fleisch, Fisch oder dergleichen auftretenden Fettspritzern verbundenen Unannehmlichkeiten die Bratgefäße mit einer Abdeckung zu versehen, bei der eine Filterscheibe aus einem faserigen Material wie Löschpapier, Filterpapier oder dergleichen von einem metallischen Ring getragen und gehalten wird, wobei die Filterscheibe nach ihrem Gebrauch bzw. Verbrauch gegen eine neue ausgewechselt werden kann. Abgesehen von der ungleichmäßigen Durchlässigkeit des verwendeten Papiers ist die Auswechselung der Filterscheiben problematisch, wenn die metallischen Teile stark erhitzt sind, von erheblichem Nachteil ist aber insbesondere, daß die Metallteile der Vorrichtung verhältnismäßig aufwendig und zeitraubend gereinigt werden müssen.

Es wurden auch schon selbsttragende Abdeckungen bekannt, die zur Vermeidung dieses Nachteils als verhältnismäßig billige Einwegprodukte ausgebildet sind, d.h. nach ihrem Gebrauch bzw. Verbrauch weggeworfen werden. So ist es durch das DE-U- 79 18 297 bekannt, eine selbsttragende Abdeckung aus einem faltbaren weitgehend wasserdampfdurchlässigem Faserstoff wie Filterpapier herzustellen.

Dabei ist vorgesehen, die selbsttragende Funktion durch Stehfalze, durch die Ausbildung als flache Pyramide oder auch durch die Ausbildung als mehrere gegeneinander verdrehbare sich längs ihrer Ränder überlappende Sektoren auszubilden. Zur Unterstützung dieser Maßnahmen kann auch noch vorgesehen sein, den Faserstoff durch Tränken in einer Stärkelösung zu festigen.

Durch die DE-A- 29 15 274 ist eine weitere Einwegabdeckung bekannte geworden, bei der eine wasserdampfdurchlässige Filterfläche aus einem Faserstoff, wie Filterpapier, mit ihrem Rand auf einen diese umgebenden Tragring sowie innerhalb des Tragrings ausgebildete Radialarme aufkaschiert ist, wobei der Tragring und die Radialarme mit an diesen hängenden Laschen aus einer Kartonscheibe herausgestanzt sind, und wobei die Laschen aus der Ebene der Abdeckung herausbiegbar und miteinander zu einem Hubring verbindbar ausgebildet sein sollen.

Löschpapier wie auch Filterpapier bestehen aus einer Vielzahl von Fasern, die mehr oder weniger "wolkig", d.h. mehr oder weniger ungleich verteilt angeordnet sind. Entsprechend ist die Durchlässigkeit dieser Papiere über ihre flächige Erstreckung hinweg betrachtet ungleichmäßig, was bei dem hier vorgesehenen Verwendungszweck zur Folge haben kann, daß der Dampf nicht an allen Stellen in gleich guter Weise abzieht und daher zu Ungleichmäßigkeiten beim Bratgut führen kann. Diese ungleichmäßige Wirkung von solchen Abdeckungen aus Lösch- und Filterpapier kann ungewollt auch dadurch noch erhöht werden, daß das verspritzende und vom Wasserdampf mitgerissene Fett sich in sehr unterschiedlicher Weise auf der Papierfläche niederschlagen kann.

Löschpapiere und auch Filterpapiere haben desweiteren die Eigenschaft, daß sie praktisch an allen Stellen ihrer flächigen Erstreckung eine mehr oder weniger große Anzahl von Fasern aufweisen und allenfalls freie Durchgänge von geringsten Abmessungen besitzen. Dementsprechend ist die Wasserdampfdurchlässigkeit verhältnismäßig gering, was zur Folge hat, daß der Wasserdampf verhältnismäßig lange unter der Abdeckung im Bereich des Bratgutes zurückgehalten wird und das Bräunen des Bratgutes verzögert.

Deshalb wurde in der DE-A- 29 15 274 auch vorgesehen, das Filterpapier mit teilweise übergriffenen Öffnungen zu versehen, um den Dampfdurchtritt zu verbessern. Davon abgesehen nehmen bei dieser DE-Patentschrift die Radialarme einen verhältnismäßig großen Teil der Filterfläche für sich in Anspruch, die dementsprechend aber nicht mehr als wasserdampfdurchlässige Fläche zur Verfügung steht, wodurch der Dampfdurchtritt weiterhin verschlechtert und damit das Brühen verzögert wird, wie dies auch der Fall ist, wenn gemäß dem DE-U- 79 18 297 das Filterpapier durch eine Tränkung in einer Stärkelösung verfestigt wird.

Die vorliegende Erfindung macht es sich zur Aufgabe, eine solche ungleichmäßige und ungenügende Filterwirkung bei dampfdurchlässigen Abdeckungen für offene Bratpfannen oder dergleichen Gefäße aus Fasermaterial, insbesondere Papier, zu verhindern.

Nach dem Vorschlag der Erfindung wird dies erreicht durch die Verwendung von kochfestem Teebeutelpapier mit einer offenen Siebstruktur und einer Wasserdampfdurchlässigkeit über 80 %, insbesondere über 90 %.

Teebeutelpapier der vorstehend genannten Art weist ein festes siebförmiges, d.h. feinmaschiges Gefüge mit verhältnismäßig gleichförmigen und gleichgroßen Poren bzw. Öffnungen auf, wobei letztere allenfalls von einzelnen feinster Fasern überzogen sind.

Das beim Bratvorgang verdampfende Wasser kann verhältnismäßig ungehindert durch die Öffnungen hindurch abziehen, wogegen das vom Wasserdampf mitgerissene und auch das verspritzende Fett sich entsprechend der großen Saugfähigkeit der Faseranhäufung in der Siebstruktur an dieser und so gut wie nicht an den die Öffnungen überbrückenden wenigen feinen Fasern niederschlägt. Dadurch ist aber gewährleistet, daß sich die Siebstruktur mit ihren gleichmäßig verteilt angeordneten Öffnungen über den ganzen Bratvorgang hinweg in praktisch unveränderter Form erhält und somit immer eine gleichmäßige und gute Filterwirkung gewährleistet ist.

In zweckmäßiger weiterer Ausbildung der Erfindung ist vorgesehen, ein Teebeutelpapier zu verwenden, das gleichmäßig verteilt Öffnungen einer Breite von 0,02 bis 0,6, insbesondere 0,5 mm, aufweist, wodurch sich eine für alle Fälle der Anwendung günstige und gleichbleibend gute Filterwirkung ergibt.

Es ist ferner Aufgabe der vorliegenden Erfindung, unter Verwendung des beschriebenen Teebeutelpapiers einen Bratfilter als selbsttragende Abdeckung für das offene Braten zu schaffen, der die Nachteile der bekannten Abdeckungen vermeidet und eine größtmögliche Filterfläche von möglichst gleichmäßiger Beschaffenheit und möglichst großer Wasserdampfdurchlässigkeit aufweist.

Diese Aufgabe wird erfindungsgemäß dadurch gelöst, daß die Filterfläche aus kochfestem Teebeutelpapier mit offener Siebstruktur und einer Wasserdampfdurchlässigkeit von über 80 % hergestellt wird und auf dieses weitgehend verschnittfrei herstellbare streifenförmige Verstärkungen aus Papier oder Kunststoff aufkaschiert werden, deren Enden bis an den Rand der Filterfläche reichen.

Bevorzugt werden Teebeutelpapiere verwendet, die eine Wasserdampfdurchlässigkeit von über 90 % aufweisen und gleichmäßig verteilte Öffnungen einer Breite von 0,2 bis 0,6, insbesondere 0,5 mm, besitzen.

Um die Verstärkungen einfach mit dem Teebeutelpapier zu verbinden, können diese selbst und/oder das Teebeutelpapier wenigstens im Bereich der aufzubringenden Verstärkungen heißsiegelfähig sein.

Die Verstärkungen haben nach dem Vorschlag der Erfindung insbesondere I-, L-, M-, N-, S-, V-, W- oder Z-Form. Die Verstärkungen können sich gegenseitig überdecken, indem beispielsweise zwei oder mehrere Verstärkungen gleicher oder verschiedener Form kreuz und quer oder entgegengesetzt zueinander vorgesehen werden. Dabei sollten rein radiale Anordnungen vermieden werden.

Die Breite der Verstärkungsstreifen wird selbstverständlich so gewählt, daß die wirksame wasserdampfdurchlässige Fläche des Bratfilters so wenig wie möglich beeinträchtigt wird, d.h. eine möglichst große wirksame Fläche erhalten bleibt, andererseits aber die erforderliche selbsttragende Eigenschaft des Bratfilters sicher gewährleistet ist.

Für den Fall der Verwendung eines Faserstoffes wie Papier ist es vorteilhaft, ein Material mit einem Flächengewicht von 200 bis 400, insbesondere 300 g/m² zu verwenden, also einen Karton.

In der Mitte des Bratfilters wird zweckmäßig ein Griff aus dem gleichen Material wie die Verstärkungen aufkaschiert oder durch Heißsiegelung aufgebracht, wobei dieser als schmaler Streifen ausgebildet sein kann, dessen Mittelstück fest mit dem Filterpapier verbunden wird und dessen beide Enden aufbiegbar ausgebildet sind, so daß sich das Bratfilter mittels dieser aufgebogenen Enden auf die Pfanne aufsetzen bzw. nach Gebrauch von dieser abheben läßt. Ein solcher Griff kann vorteilhaft in der Mitte der Filterfläche angebracht werden, es sind aber auch andere Lösungen denkbar, beispielsweise in zwei einander gegenüberliegenden Randbereichen je einen Griff vorzusehen.

Die Erfindung ist in der Zeichnung in einem Ausführungsbeispiel gezeigt und wird anhand dieses nachstehend erläutert. Es zeigen

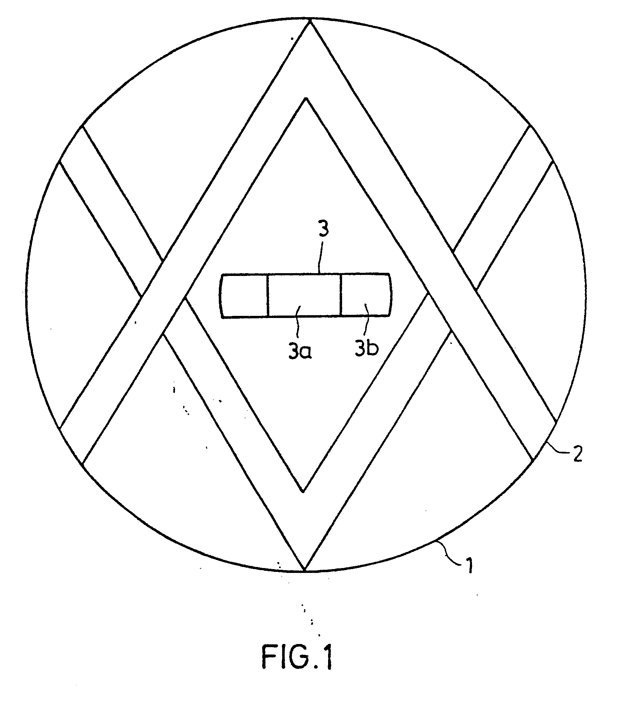

Figur 1 eine Draufsicht auf das erfindungsgemäße Bratfilter und

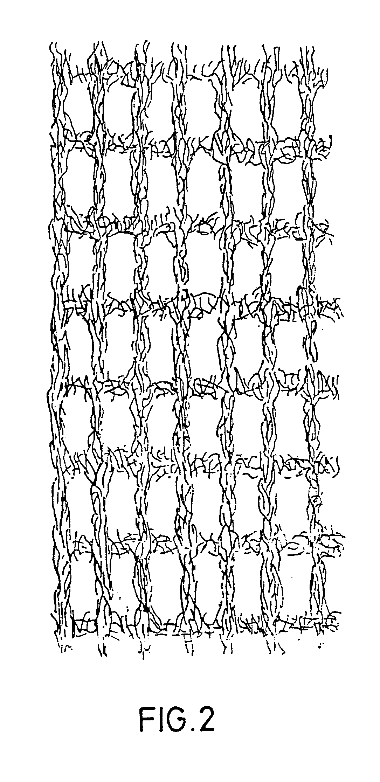

Figur 2 in stark vergrößertem Maßstab in einem Ausschnitt ein Beispiel für die Struktur eines erfindungsgemäß verwendbaren Teebeutelpapiers.

Auf der als kreisrunde Fläche ausgebildeten Filterfläche 1 aus Teebeutelpapier sind die V-förmigen Streifen 2 beispielsweise aus Karton durch Heißsiegeln befestigt. In dem von den Streifen gebildeten Zwischenraum ist der streifenförmige Griff 3 aufgebracht und mit seinem Mittelstück 3a fest mit dem Filterpapier 1 verbunden, wogegen die Enden 3b des Streifens aufgebogen bzw. aufbiegbar ausgebildet sind.

Die Struktur eines Teebeutelpapiers, wie es für die erfindungsgemäße Verwendung und den Bratfilter in Betracht kommt, ist in stark vergrößertem Maßstab in der Figur ausschnittweise gezeigt. Danach sind die Fasern in Längs- wie auch in Querrichtung gitterförmig angeordnet, wobei im wesentlichen gleichförmige und gleich große rechteckige Öffnungen gebildet sind, über die sich nur vereinzelte dünne Fasern hinweg erstrecken.

Diese Öffnungen können auch quadratisch sein oder die Form von gegeneinander versetzten Schlitzen der angegebenen Breite und wenigen Millimetern Länge haben.

Ein sehr geeignetes Teebeutelpapier ist beispielsweise das heißsiegelfähige, offenporige Langfaserteebeutelpapier 116-0 der Papierfabrik Schoeller & Hoesch GmbH, Gernsbach.

## Patentansprüche

1. Verwendung von kochfestem Teebeutelpapier mit offener Siebstruktur und einer Wasserdampfdurchlässigkeit über 80 %, insbesondere über 90 %, als Filterfläche von Abdeckungen für Bratpfannen oder ähnliche Gefäße.

2. Verwendung eines Teebeutelpapiers nach Anspruch 1 mit gleichmäßig verteilten Öffnungen einer Breite von 0,2 bis 0,6, insbesondere 0,5 mm für die Zwecke des Anspruchs 1.

3. Verwendung eines heißsiegelfähigen Filterpapiers nach Anspruch 1 für die Zwecke des Anspruchs 1.

4. Bratfilter als selbsttragende Abdeckung für Bratpfannen oder ähnliche Gefäße mit einer dampfdurchlässigen Filterfläche aus Filterpapier, dadurch gekennzeichnet, daß das Filterpapier kochfestes Teebeutelpapier mit offener Siebstruktur und einer Wasserdampfdurchlässigkeit über 80 % ist, auf das weitgehend verschnittfrei herstellbare Verstärkungen aus Fasermaterial wie Papier oder Kunststoff aufkaschiert sind, deren Enden bis an den Rand der Filterfläche reichen.

5. Bratfilter nach Anspruch 4, dadurch gekennzeichnet, daß kochfestes Teebeutelpapier mit einer Wasserdampfdurchlässigkeit von über 90 % verwendet wird.

6. Bratfilter nach Anspruch 4 oder 5, dadurch gekennzeichnet,daß das Teebeutelpapier gleichmäßig verteilte Öffnungen einer Breite von 0,2 bis 0,6, insbesondere 0,5 mm, besitzt.

7. Bratfilter nach einem der Ansprüche 4 bis 6, dadurch gekennzeichnet, daß das Teebeutelpapier wenigstens im Bereich der aufgebrachten Verstärkungen heißsiegelfähig ist.

8. Bratfilter nach einem der Ansprüche 4 bis 7, dadurch gekennzeichnet, daß die Verstärkungen I-, L-, M-, N-, S-, V-, W- oder Z-Form haben.

9. Bratfilter nach einem der Ansprüche 4 bis 8, dadurch gekennzeichnet, daß er mit einem Griff versehen ist.

## Claims

1. The use of boil-proof tea-bag paper with an open mesh structure and a water vapour permeability over 80%, in particular over 90%, as a filter surface of coverings for frying-pans or similar vessels.

2. The use of a tea-bag paper according to Claim 1 with uniformly distributed openings of a width of 0.2 to 0.6, in particular 0.5 mm for the purposes of Claim 1.

3. The use of a heat-sealing filter paper according to Claim 1 for the purposes of Claim 1.

4. Frying filter as self-supporting covering for frying pans or similar vessels with a filter surface, which is permeable to water vapour, of filter paper, characterised in that the filter paper is boil-proof tea-bag paper with an open mesh structure and a water vapour permeability over 80%, onto which reinforcements, which can be produced substantially waste-free, of fibrous material such as paper or synthetic material are laminated, the ends of which extend up to the edge of the filter surface.

5. Frying filter according to Claim 4, characterised in that boil-proof tea-bag paper with a water vapour permeability of over 90% is used.

6. Frying filter according to Claim 4 or 5, characterised in that the tea-bag paper has uniformly distributed openings of a width of 0.2 to 0.6, in particular 0.5 mm.

7. Frying filter according to Claims 4 to 6, characterised in that the tea-bag paper is heat-sealing at least in the region of the applied reinforcements.

8. Frying filter according to one of Claims 4 to 7, characterised in that the reinforcements have an I-, L-, M-, N-, S-, V-, W- or Z shape.

9. Frying filter according to one of Claims 4 to 8, characterised in that it is provided with a handle.

## Revendications

1. Utilisation d'un papier pour sachets d'infusion, résistant à l'ébullition, présentant une structure de tamisage ouverte et une perméabilité à la vapeur d'eau supérieure à 80 %, notamment supérieure à 90%, en tant que surface filtrante de recouvrements de poêles à frire ou de récipients analogues.

2. Utilisation d'un papier pour sachets d'infusion selon la revendication 1, présentant des orifices uniformément répartis d'une largeur de 0,2 à 0,6, notamment de 0,5 mm, pour les objectifs de la revendication 1.

3. Utilisation d'un papier filtrant pouvant être scellé à chaud, selon la revendication 1, pour les objectifs de la revendication 1.

4. Filtre de cuisson sous la forme d'un recouvrement autoporteur pour poêles à frire ou récipients analogues, présentant une surface filtrante en papier filtrant perméable à la vapeur, caractérisé par le fait que le papier filtrant est un papier pour sachets d'infusion résistant à l'ébullition, présentant une structure de tamisage ouverte et une perméabilité à la vapeur d'eau supérieure à 80 %, qui est doublé de renforts en un matériau fibreux comme du papier ou une matière plastique, pouvant être produits largement dépourvus de découpes et dont les extrémités s'étendent jusqu'au bord de la surface filtrante.

5. Filtre de cuisson selon la revendication 4, caractérisé par le fait qu'on utilise un papier pour sachets d'infusion résistant à l'ébullition, ayant une perméabilité à la vapeur d'eau supérieure à 90 %.

6. Filtre de cuisson selon la revendication 4 ou 5, caractérisé par le fait que le papier pour sachets d'infusion possède des orifices uniformément répartis, d'une largeur de 0,2 à 0,6 notamment de 0,5 mm.

7. Filtre de cuisson selon l'une des revendications 4 à 6, caractérisé par le fait que le papier pour sachets d'infusion peut être scellé à chaud, au moins au voisinage des renforts déposés.

8. Filtre de cuisson selon l'une des revendications 4 à 7, caractérisé par le fait que les renforts présentent la forme d'un I, d'un L, d'un M, d'un N, d'un S, d'un V, d'un W ou d'un Z.

9. Filtre de cuisson selon l'une des revendications 4 à 8, caractérisé par le fait qu'il est muni d'une poignée.

FIG.1

FIG.2